# EUROPEAN PATENT APPLICATION

(11) **EP 1 677 002 A2**
(43) Date of publication of application: **05.07.2006**
(21) Application number: 05028128.6
(22) Date of filing: 22.12.2005
(51) Int. Cl.: F03D 9/00

(54) **Wind turbine**

(30) Priority: 28.12.2004 IT BO20040812
(71) Applicant: Green Power Technology S.r.l., 60027 Osimo AN (IT)
(72) Inventor: Ghergo, Clemente, 60027 Osimo (Ancona) (IT); Ghergo,Luciano, 60027 Osimo (Ancona) (IT); Binci, Lorenzo, 60027 Osimo (Ancona) (IT)
(74) Representative: Dall'Olio, Giancarlo

(57) **Abstract**

A system for transforming wind power into electric power, of the type including a propeller (5), whose shaft (4) is supported rotating by a structure (3), the propeller (5) being driven in rotation by the interaction with the wind, and means interposed between the shaft (4) of the propeller (5) and an electric generator (10) The above mentioned means include at least one hydraulic pump (6m), operated by the shaft (4) of the propeller (5), and a hydraulic motor (8), fed by the pump and driving to rotate the shaft of the electric generator (10).

## Description

### DESCRIPTION OF THE INVENTION

The present invention relates to the technical field concerning apparatuses for transforming wind power into power of another type, e.g. electric power.

On the international scale, subscribing to previous agreements regarding the reduction of the greenhouse effect, see the Kyoto protocol, has obliged government institutions to promote and encourage the development and exploitation of renewable sources.

Renewable sources include sun, wind, water and geothermal sources, sea tides, wave motion and transformation of vegetal products and organic and non organic wastes into electric power.

With a particular reference to the transformation of wind power into electric power, committed to the so-called aerogenerators, Europe, is already the world leader in this field, and expects a considerable increase of the demand rate in the next years, bringing the amount of electric power produced by the aerogenerators up to the 10,6%, with respect to the total consumption of the European Community.

In order to come up to the expectations of development and increase of the generating plants, which exploit this source of renewable energy, the big industrial groups have concentrated their resources on the development and production of big power wind generators (more than 1 megawatt power turbines), aimed at being installed offshore (in the sea) and on-shore (on the land), despite different difficulties have been encountered.

The major obstacles occurred during the implementation of wind power production sites will be summarized in the following.

First of all, it is necessary to find the areas having a constant and considerable windiness, suitable geomorphological characteristics, that is without particular relieves or unevenness.

In Europe, most of the electric generators driven by wind turbines can be found in the north and oceanic areas, which are subjected to constant wind, faster than 10 meters per second for many days a year and having geomorphological profiles substantially without irregularities.

Then, the installation of the high power wind turbines, that is big multi-turbine power plants, causes an environment impact from the aesthetic point of view as well as noise pollution, which makes them inappropriate in densely populated places or in places of particular naturalistic importance.

Last but not least, the difficulty deriving from the high installation costs of the wind generators with respect to, e.g. usual gas micro-turbines: such a difference can be reabsorbed only partially by the future market increase; moreover, the increase of the demand rate, implying the increase of the structural dimensions of the aerogenerators, reduces the possible saving margin of the relative costs for each kilowatt of demand rate.

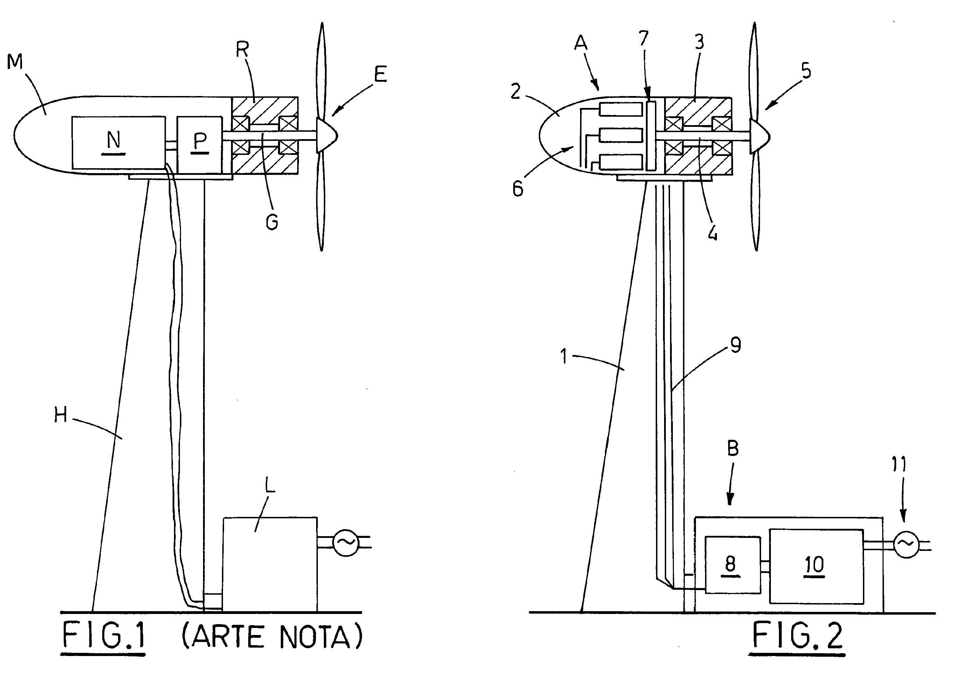

For example, Figure 1 shows an aerogenerator of known type, including a tower H, whose upper part supports a nacelle M.

The nacelle M houses: a structure R, that supports a rotating shaft G of an impeller E, a revolution multiplier P and an electric generator N.

The impeller E includes a variable number of blades, usually not bigger than six, whose interaction with the wind causes the rotation of the shaft G, which operates the shaft of the electric generator N, due to the functional interposition of the multiplier P.

The generator N is electrically connected to a power supply box L, which regulates the supply of electric energy e.g. to the national network.

Apparatuses of this kind, with the generator N and the multiplier P housed in the nacelle M constituting a big part of the total weight and dimensions, require a suitable dimensioning of the tower H, whose mass determines a bigger cost and unpleasant impact on the aesthetic characteristics.

Moreover, the group defined by the electric generator N, the multiplier P, the related mutual coupling means, the shaft G and the propeller E, causes considerable mechanical inertia and friction loss, which prevent good working of the aerogenerator at low speeds of the wind, e.g. lower than 5 meters per second.

It is difficult to find places having wide spaces, suitable for large production plants in the central-southern Europe (including the South Italy areas), swept by winds of 8-10 m/s (too low with respect to winds of 13-15 m/s, typical for the northern areas) and
characterized by low population density, as well as by variable morphological characteristics of the territory, rich in irregularities and unevenness.

Such scenery needs an innovative technical solution, which allows to overcome, or at least to reduce considerably, the above mentioned limits and drawbacks, typical for the plants of a certain power, which transform wind energy into electric energy.

Therefore, the object of the present invention is to propose a system for transforming wind energy into electric energy, whose implementation restrains its dimensions, total costs and reduces environment impact with respect to known systems of the same power.

Another object of the present invention is to propose a system, which maintains a satisfying performance within a wide range of wind speed, especially working at the speed values usually not sufficient for keeping known systems active.

The above mentioned objects are obtained in accordance with the contents of the claims.

The characteristic features of the invention will be pointed out in the following description, in accordance with the claims and with help of the enclosed figures, in which:
- Figure 1 is a lateral, schematic view of an aerogenerator of prior art;
- Figure 2 is a lateral, schematic view of the system proposed by the present invention;
- Figures 3a, 3b are schematic, enlarged views of respectively particular A and B of Figure 2;
- Figure 4 is a lateral, schematic view of the system proposed by the invention, according to a possible embodiment.

Having regard to Figure 2, the reference numeral 1 indicates a tower, whose upper part supports a nacelle 2.

The tower 1 houses a structure 3, which supports a rotating shaft 4 of a propeller 5, a plurality of hydraulic pumps 6 and means 7 for removable coupling the pumps with the shaft 4 of the propeller 5.

A hydraulic motor 8, situated at the base of the tower 1, is powered by the plurality of hydraulic pumps 6, by means 9, which are situated, e.g. inside the tower 1.

The motor 8 is also aimed at driving into rotation the shaft of an electric generator 10, which in turn is connected to a network 11, with functional interposition of a control cabin, not shown in Figures, as known.

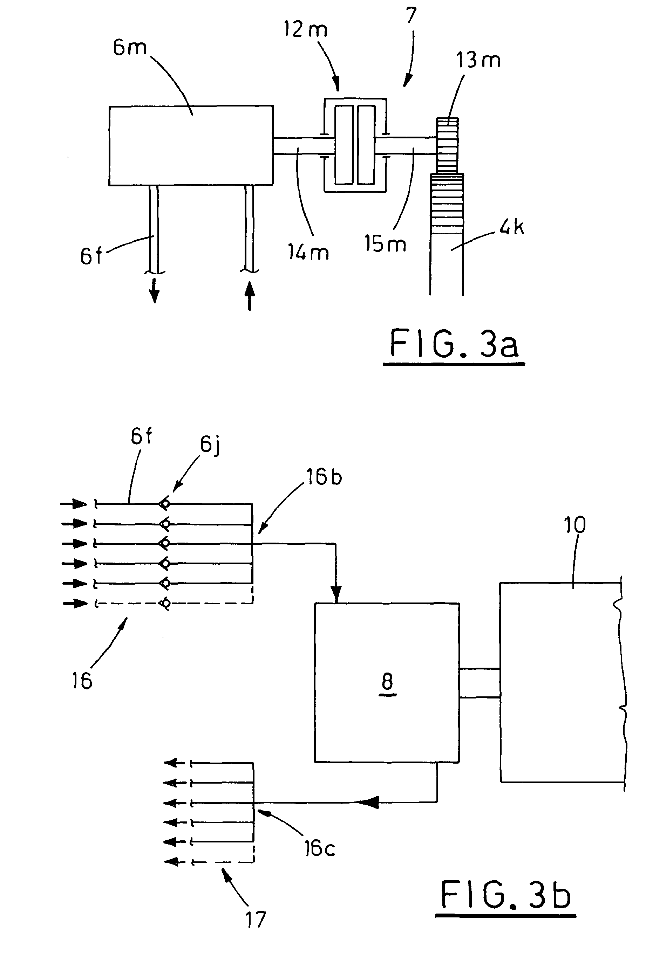

With reference to Figure 3a, a generic hydraulic pump 6m, belonging to the plurality of pumps 6, has its driving shaft 14m connected to a joint 12m, e.g. electromagnetic, which supports a connecting shaft 15m.

A pinion 13m, mounted to the free end of the connecting shaft 15m, engages with a toothed wheel 4k, keyed onto the free end of the shaft 4 of the propeller 5.

The joint 12m defines a removable coupling between the 14m of the pump 6m and the connecting shaft 15m, which supports the pinion 13m.

The joint 12m is activated and deactivated by a central control unit, not shown, to e.g. adjust the introduction of the electric power into the network.

The group defined by the toothed wheel 4k and by the elements, which allow its functional interaction with the driving shaft 14m of each pump 6m, that is the joint 12m, the pinion 13m and the relative connecting shaft 15m, form the above mentioned means of removable coupling 7, whose activation, as it has already been said, is operated by the central control unit.

Figure 3b shows, in a schematic way, the oil delivery pipes 16 and the oil return pipes 17, which, together with the plurality of hydraulic pumps 6, define a closed oil pressure circuit.

In particular, the delivery pipe 6f of each pump 6m has e.g. a check valve 6j.

The same Figure shows also a manifold 16b and a distributor 16c, situated e.g. near the motor 8, the first of which is aimed at connecting all the delivery pipes 16 to one pipe, and the second having a complementary function on the return pipes 17.

Now the operation of the system proposed by the present invention will be described.

The force performed by the wind on the active surfaces of blades of the propeller 5 drives the shaft 4, and consequently, the toothed wheel 4k into rotation.

This rotary movement is transmitted to the pinions and, after activation of the corresponding joints, to the relative driving shafts of the plurality of the pumps 6.

The central control unit commands activation of each hydraulic pump in relation to the wind speed or, e.g. to maximize the total performance of the plurality of pumps 6.

For example, when the propeller 5 is immobile, it is possible to allow the activation of only one hydraulic pump, in order to minimize the mechanical inertia of the rotating masses connected with the propeller 5.

When the activation is completed, or when the shaft 4 has reached a prefixed speed, the activation of other pumps is subordinated to the actual wind speed, to the optimizing of the total performance of the aerogenerator or to electric power demands, which could be irregular in some hours of the day or in some periods of the year.

The oil pushed along the relative delivery pipes 16 of the activated pumps drives the shaft of the oil pressure motor 8, which in turn, drives the shaft of the electric generator 10.

The power supply box adjusts the supply of electric power to the network, as it has already been explained, possibly adapting its power parameters by a transformer.

The installation of a plurality of hydraulic pumps 6 allows to use single pumps of reduced power, operating in best way also at low values of mechanical torque applied to the relative driving shaft: thus, at low wind speed, it is possible to maintain the aerogenerator active by activating only one hydraulic pump, which e.g. can utilize low values of mechanical torque available for the shaft 4 of the propeller 5.

Moreover, the possibility of activating more hydraulic pumps in proportion to the wind intensity, thus to the torque supplied to the shaft 4, allows to optimize the total performance of the proposed aerogenerator within a wide range of wind speed.

Therefore, the system for transforming wind power into electric power can advantageously work at these wind speed values, which are normally insufficient to maintain active the systems of known type.

Another advantage of the present invention lies in the fact that it has conceived a system for transforming wind power into electric power, which reduces considerably the drawbacks mentioned in the introductory note: actually, the substantial lightening of the nacelle 2 allows to contain the costs and dimensions of the tower 1 and of the same nacelle 2, thus minimizing the environmental impact of the whole aerogenerator.

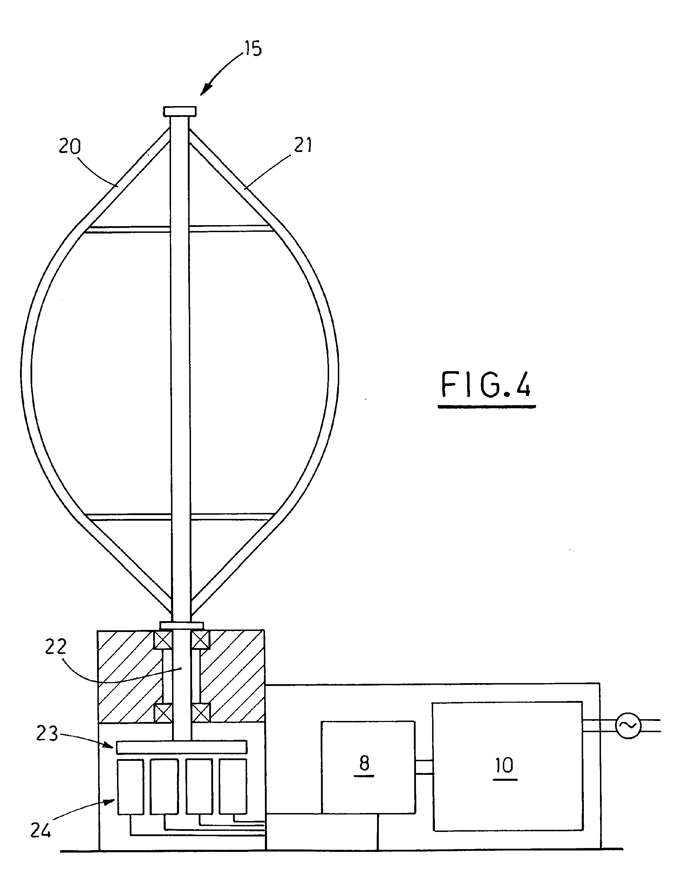

Figure 4 shows a possible embodiment of the proposed system, in which the propeller 15 has blades 20, 21, e.g. of the "Darrieus" type; also in this case, the working principle is the same as the one described previously: actually, removable coupling means 23 are interposed between the shaft 22 of the propeller 15 and a plurality of hydraulic pumps 24, to allow the activation of one or another pump of the plurality 24, after enabling by the central control unit, not shown.

The advantage of this solution, with respect to known solutions, lies in the possibility of increasing, or decreasing, the number of active hydraulic pumps; this allows, as already pointed out, to optimize the total transforming performance, to possibly reduce or stop the production of electric power, as well as to allow a good system working also at wind low velocities.

The shaft 4 of the propeller 5 can be connected to the plurality of pumps 6 in different ways, known to those skilled in the field.

## Claims

1. System for transforming wind power into electric power, of the type including a propeller (5), whose shaft (4) is supported rotatingly by a structure (3), said propeller (5) being driven into rotation by the interaction with the wind, and means interposed between the shaft (4) of said propeller (5) and an electric generator (10), **characterized in that** the above mentioned means include at least one hydraulic pump (6m), operated by said shaft (4) of said propeller (5), and a hydraulic motor (8), fed by said pump for driving into rotation the shaft of said electric generator (10).

2. System, as claimed in claim 1, in which said structure (3) includes a tower (1), whose upper part carries a nacelle (2), supporting the shaft (4) of said propeller (5), **characterized in that** said hydraulic pump (6m) is situated inside said nacelle (2), and **in that** said hydraulic motor (8) is situated at the base of said tower (1), means (9) being functionally interposed between said pump (6m) and the hydraulic motor (8).

3. System, as claimed in claim 1, in which said structure (3) includes a tower (1), whose upper part carries a nacelle (2), supporting the shaft (4) of said propeller (5), **characterized in that** it includes a plurality of hydraulic pumps (6), situated inside said nacelle (2), and **in that** said hydraulic motor (8) is situated at the base of said tower (1), means (9) being functionally interposed between said plurality of hydraulic pumps (6) and the hydraulic motor (8).

4. System, as claimed in claim 2, **characterized in that** it includes removable coupling means (7), functionally interposed between the driving shaft (14m) of said hydraulic pump (6m) and the shaft (4) of said propeller (5), said removable coupling means being activated and deactivated by a central control unit.

5. System, as claimed in claim 3, **characterized in that** it includes removable coupling means (7), functionally interposed between the driving shaft (14m) of said hydraulic pump (6m) and the shaft (4) of said propeller (5), each of said removable coupling means being activated and deactivated by a central control unit.
